(19) Europäisches Patentamt
European Patent Office
Office européen des brevets

(11) **EP 2 755 055 B1**

(12) **EUROPEAN PATENT SPECIFICATION**

(45) Date of publication and mention of the grant of the patent:
**02.03.2022   Bulletin 2022/09**

(21) Application number: **14150664.2**

(22) Date of filing: **09.01.2014**

(51) International Patent Classification (IPC):
**G01V 1/28** (2006.01)

(52) Cooperative Patent Classification (CPC):
**G01V 1/28**

(54) **Dip based tomography for estimating depth velocity models by inverting pre-stack dip information present in migrated seismic data**

Fallwinkel-basierte Tomographie zur Bestimmung von Tiefengeschwindigkeitsmodellen durch Invertierung von in migrierten Seismikdaten vorhandenen Prestack-Eintauchinformationen

Tomographie par immersion pour modélisation de vitesse en profondeur en inversant des informations pré-empilées présentes dans des données sismiques migrées

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2013   US 201361751567 P**

(43) Date of publication of application:
**16.07.2014   Bulletin 2014/29**

(73) Proprietor: **CGG Services SAS**
**91300 Massy (FR)**

(72) Inventors:
• **Guillaume, Patrice**
  **91300 Massy (FR)**
• **Lambare, Gilles**
  **91300 Massy (FR)**

(74) Representative: **Ipsilon**
**Le Centralis**
**63, avenue du Général Leclerc**
**92340 Bourg-la-Reine (FR)**

(56) References cited:
• **V. FARRA ET AL: "Non-Linear Reflection Tomography", GEOPHYSICAL JOURNAL INTERNATIONAL., vol. 95, no. 1, 1 October 1988 (1988-10-01), pages 135-147, XP055356156, GB ISSN: 0956-540X, DOI: 10.1111/j.1365-246X.1988.tb00456.x**

• **J. P. MONTEL ET AL: "Non-linear Slope Tomography - Extension to MAZ and WAZ", SEG/SAN ANTONIO 2007 ANNUAL MEETING, 14 June 2010 (2010-06-14), XP055284371, ISSN: 2214-4609, DOI: 10.3997/2214-4609.201401159 ISBN: 978-90-73-78153-5**

• **LAMBARÉ G: "Stereotomography", GEOPHYSICS, SOCIETY OF EXPLORATION GEOPHYSICISTS, US, vol. 73, no. 5, sup, 1 September 2008 (2008-09-01), pages VE25-VE34, XP001516154, ISSN: 0016-8033, DOI: 10.1190/1.2952039**

• **PATRICE GUILLAUME ET AL: "Kinematic invariants: an efficient and flexible approach for velocity model building", SEG TECHNICAL PROGRAM EXPANDED ABSTRACTS 2008, 14 November 2008 (2008-11-14), pages 3687-3692, XP055137075, DOI: 10.1190/1.3064100**

• **G LAMBARÉ ET AL: "Non-Linear tomography for time imaging Introduction", 71 ST EAGE CONFERENCE & EXHIBITION - AMSTERDAM, 8 June 2009 (2009-06-08), XP055356154,**

• **GILLES LAMBARÉ ET AL: "Velocity update for pre-stack time migration", SEG TECHNICAL PROGRAM EXPANDED ABSTRACTS 2008, 9 November 2008 (2008-11-09), pages 3250-3254, XP055356559, DOI: 10.1190/1.3064020**

• **HERVÉ CHAURIS ET AL: "Migration velocity analysis from locally coherent events in 2-D laterally heterogeneous media, Part II: Applications on synthetic and real data", GEOPHYSICS, vol. 67, no. 4, 1 July 2002 (2002-07-01), pages 1213-1224, XP055356550, US ISSN: 0016-8033, DOI: 10.1190/1.1500383**

**Description**

**RELATED APPLICATION**

The present application is related to, and claims priority from U.S. Provisional Patent Application No. 61/751,567, filed January 11, 2013, entitled "DIP TOMOGRAPHY FOR ESTIMATING DEPTH VELOCITY MODELS BY INVERTING PRE-STACK DIP INFORMATION PRESENT IN MIGRATED OR IN UN-MIGRATED PRE-STACK OR POST-STACK SEISMIC DATA," to Patrice GUILLAUME.

**TECHNICAL FIELD**

Embodiments of the subject matter disclosed herein generally relate to methods and systems for seismic data processing and, more particularly, to mechanisms and techniques for improving depth imaging based on a dip-constrained inversion.

**BACKGROUND**

Seismic data acquisition and processing techniques are used to generate a profile (image) of a geophysical structure (subsurface) of the strata underlying the land surface or seafloor. Among other things, seismic data acquisition involves the generation of acoustic waves and the collection of reflected/refracted versions of those acoustic waves to generate the image. This image does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing process in the field of seismic surveying.

Considering the improvement of seismic images, the purpose of velocity model construction is for developing an accurate velocity model for seismic imaging. Based on the fact that the inverse problem is non-linear and complex, a solution comprises both a non-linear optimization process and the introduction of relevant constraints providing a converging solution. An iterative non-linear inversion technique for reflection tomography is described by V. Farra in his 1988 article entitled "Non-linear reflection tomography", published in Geophysical Journal, 95, pages 135 to 147. Non-linear tomography tools based on non-linear tomography, such as those described by G. Lambaré in his 2008 article entitled "Stereotomography," published in Geophysics, 73, 5, pages VE25-VE34. The non-linear tomography tools are the basis of efficient solutions suitable for dense volumetric picking as described by P. Guillaume, G. Lambaré, O. LeBlanc, P. Mitouard, J. Le Moigne, J.-P. Montel, A. Prescott, R. Siliqi, N. Vidal, X. Zhang and S. Zimine in their 2008 article entitled "Kinematic Invariants: An Efficient and Flexible Approach for Velocity Model Building," published in the 78th SEG Conference & Exhibition, Workshop "Advanced Velocity Model Building Techniques for Depth Imaging" and by H. Tieman, J. Sherwood, K. Schleicher, K. Sherwood and S. Brandsberg-Dahl in their 2009 article entitled "Dipscan Tomography," published in the 71st EAGE Conference & Exhibition, Expanded Abstracts.

A wide variety of smoothness and structural constraints have been proposed for the velocity model as well as positioning and structural constraints on the reflectors as described by F. Delprat-Jannaud and P. Lailly (hereinafter DELPRAT-JANNAUD) in their 1993 article entitled "Ill-Posed and Well-Posed Formulations of the Reflection Travel Time Tomography Problem," published in the Journal of Geophysical Research, 98, B4, pages 6589-6605, D. Sinoquet in his 1993 article entitled "Modeling A Priori Information on the Velocity Field in Reflection Tomography," published in the 63rd SEG Conference & Exhibition, Expanded Abstracts, SI 1.4, pages 592-595, S. Jin in his 1999 article entitled "Constrained Non-Linear Velocity Inversion of Seismic Reflection Data," published in the 69th SEG Conference & Exhibition, Expanded Abstracts, pages 1259-1262, and by F. Adler, R. Baina, M. A. Soudani, P. Cardone and J.-B. Richard in their 2008 article entitled "Non-Linear 3D Tomography Least-Squares Inversion of Residual Moveout in Kirchhoff Pre-stack-Depth-Migration Common-Image Gathers," published in Geophysics, 73, 5, pages VE13-VE23.

Acknowledging that structural constraints can be introduced as soon as some structural knowledge is known about the expected image, imaging distortions associated with but not limited to shallow heterogeneities, channels, faults, gas clouds, rough topography or a flat spot can be corrected by proper structural constraints. Further, the introduction of structural constraints on reflectors has been limited to horizons, as described by DELPRATT-JANNAUD and by P. Sexton and P. Williamson in their 1998 article entitled "3D Anisotropic Velocity Estimation by Model-Based Inversion of Pre-Stack Traveltimes," published in the 68th SEG Conference and Exhibition, Expanded Abstracts, ST14.3, pages 1855-1858, and not extended to locally coherent events as considered in the non-linear tomography. Further, several approaches have been proposed for removing shallow channel distortions, e.g., the geometry of the channels can be fixed while the best channel-fill interval velocity is determined, either by a time consuming migration velocity scan or by a constrained migration of horizons with a lack of accuracy and flexibility based on the limited number of selected horizons.

Accordingly, it would be desirable to provide systems and methods that avoid the afore-described problems and drawbacks associated with the improvement of seismic images based on extending constraints to non-linear tomography techniques.

SUMMARY

According to various embodiments described herein, methods and systems for dip-constrained non-linear tomography are presented which, for example, introduce an additional structural constraint in non-linear tomography techniques. Such methods and systems can, for example, be used to provide the opportunity to correct pull-up and pull-down effects, resulting in improved depth imaging associated with seismic data image processing.

One object of the invention is a method according to claim 1.

Another object of the invention is a seismic system according to claim 9.

BRIEF DESCRIPTION OF THE DRAWINGS

The accompanying drawings, which are incorporated in and constitute a part of the specification, illustrate one or more embodiments and, together with the description, explain these embodiments. In the drawings:

Figures 1(a-b)-2(a-c) depict various aspects of exemplary offshore and onshore seismic survey systems in which various shear noise suppression embodiments can be implemented;
Figure 3 depicts various distortions associated with shallow channels;
Figure 4 depicts kinematic invariants and migrated facets associated with 2D non-linear tomography;
Figures 5-6 depict a shallow PreSDM stack and velocity associated with an embodiment;
Figure 7 depicts a flowchart of a method embodiment;
Figures 8 depicts various aspects of software components or modules which can be used to implement the embodiments; and
Figure 9 depicts an exemplary data processing device or system which can be used to implement the embodiments.

DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of introducing an additional structural constraint in the non-linear tomography. However, the embodiments to be discussed next are not limited to these configurations, but may be extended to other arrangements as discussed later.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to various embodiments described herein, methods and systems for dip-constrained non-linear tomography are presented which, for example, introduce an additional structural constraint in non-linear tomography techniques. Such methods and systems can, for example, be used to provide the opportunity to correct pull-up and pull-down effects, resulting in improved depth imaging.

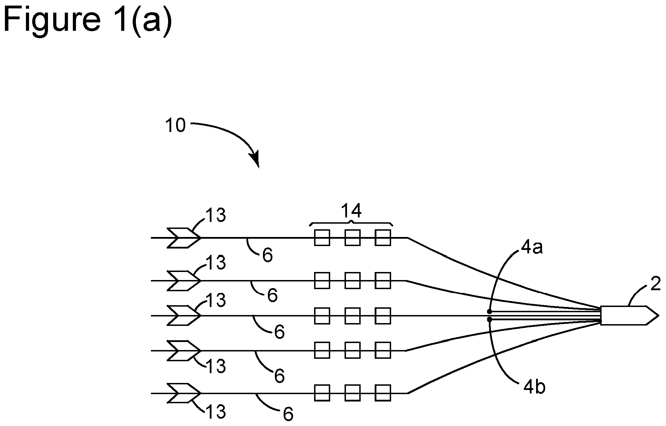

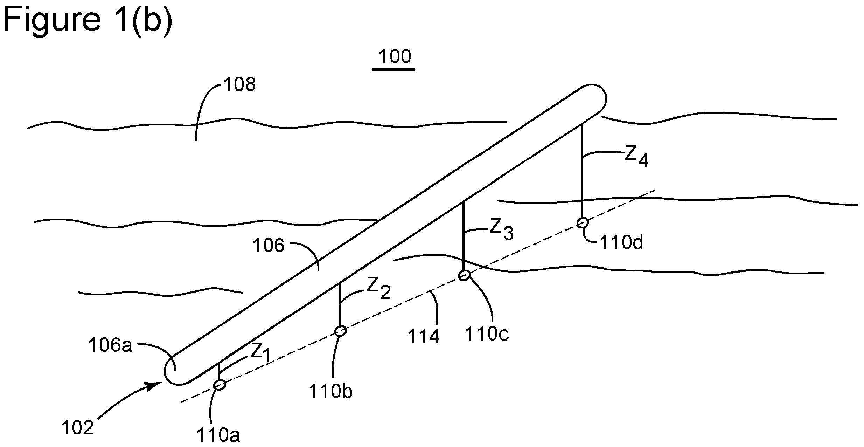

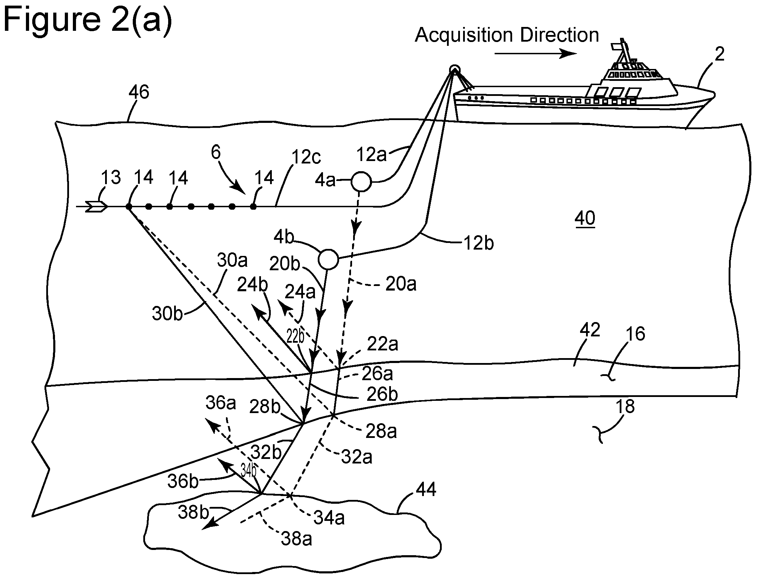

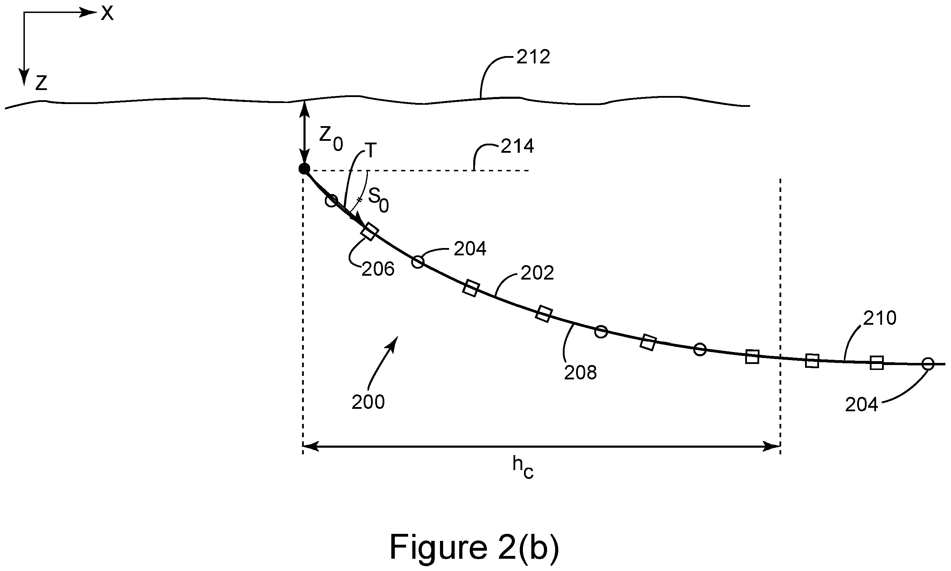

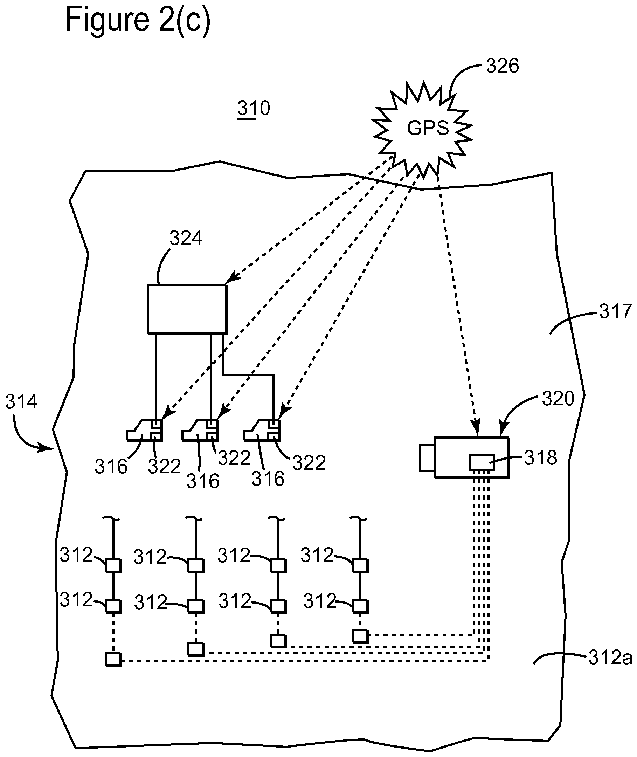

In order to provide some context for the subsequent exemplary embodiments for introducing an additional structural constraint in the non-linear tomography, consider first various seismic data acquisition processes and systems as will now be described with respect to Figure 1(a), 1(b), 2(a), 2(b) and 2(c). In Figure 1(a), a data acquisition system 10 includes a ship 2 towing a plurality of streamers 6 that can extend one or more kilometers behind the ship 2. Each of the streamers 6 can include one or more birds 13 that maintain the streamer 6 in a known fixed position relative to other streamers 6, and the one or more birds 13 are capable of moving the streamers 6 as desired according to bidirectional communications received by the birds 13 from the ship 2.

One or more source arrays 4a,b can also be towed by ship 2, or another ship, for generating seismic waves. Source arrays 4a,b can be placed either in front of or behind the receivers 14, or both behind and in front of the receivers 14. The seismic waves generated by the source arrays 4a,b propagate downward, reflect off of, and penetrate the seafloor, wherein the refracted waves eventually are reflected by one or more reflecting structures (not shown in Figure 1(a)) back to the surface (see Figure 2(a), discussed below). The reflected seismic waves then propagate upward and are detected by the receivers 14 disposed on the streamers 6. The seismic waves then reflect off of the free surface, i.e., the surface of the body of water (see Figure 2(a), discussed below), traveling downward and are once again detected by the receivers 14 disposed on streamers 6 as receiver ghosts. This process is generally referred to as "shooting" a particular seafloor area, with the seafloor area referred to as a "cell" and the sea surface referred to as a "free surface."

Further, the embodiments can be used with a multi-level source. A multi-level source 100 has one or more sub-arrays as shown in Figure 1(b). The first sub-array 102 has a float 106 that is configured to float at the water surface 108 or underwater at a predetermined depth. Plural source points 110a-d are suspended from the float 106 in a known manner. A first source point 110a may be suspended closest to the head 106a of the float 106, at a first depth $z1$. A second source point 110b may be suspended next, at a second depth $z2$, different from $z1$. A third source point 110c may be suspended next, at a third depth $z3$, different from $z1$ and $z2$, and so on. Figure 1(b) shows, for simplicity, only four source points 110a-d, but an actual implementation may have any desired number of source points.

In one application, because the source points are distributed at different depths, the source points at the different depths are not simultaneously activated. In other words, the source array is synchronized, i.e., a deeper source point is activated later in time (e.g., 2 ms for 3 m depth difference when the speed of sound in water is 1500 m/s) such that corresponding sound signals produced by the plural source points coalesce, and thus, the overall sound signal produced by the source array appears as being a single sound signal.

The depths $z1$ to $z4$ of the source points of the first sub-array 102 may obey various relationships. In one application, the depths of the source points increase from the head toward the tail of the float, i.e., $z1 < z2 < z3 < z4$. In another application, the depths of the source points decrease from the head to the tail of the float. In another application, the source points are slanted, i.e., the source points are provided on an imaginary line 114. In still another application, the line 114 is a straight line. In yet another application, the line 114 is a curved line, e.g., part of a parabola, circle, hyperbola, etc. In one application, the depth of the first source point for the sub-array 502 is about 5 m and the largest depth of the last source point is about 8 m.

In a variation of this embodiment, the depth range is between 8.5 and 10.5 m or between 11 and 14 m. In another variation of this embodiment, when the line 114 is straight, the depths of the source points increase by 0.5 m from a source point to an adjacent source point. Those skilled in the art would recognize that these ranges are exemplary and these numbers may vary from survey to survey. A common feature of all these embodiments is that the source points have variable depths so that a single sub-array exhibits multiple-level source points.

Figure 2(a) illustrates a side view of the data acquisition system 10 of Figure 1(a). Ship 2, located on sea surface 46, tows one or more streamers 6, wherein the streamer 6 are comprised of cables 12a,b,c and a plurality of receivers 14. Shown in Figure 2(a) are two source streamers, which include sources 4a,b attached to respective cables 12a,b. Each source 4a,b is capable of transmitting a respective sound wave, or transmitted signal 20a,b. For the sake of simplifying the drawings, but while not detracting at all from an understanding of the many principles involved, only a first pair of transmitted signals 20a,b will be shown (even though some or all of sources 4 can be simultaneously (or not) transmitting similar transmitted signals 20). First transmitted signal 20a,b travels through the sea 40 and arrives at first refraction/reflection point 22a,b. First reflected signal 24a,b from first transmitted signal 20a,b travels upward from the seafloor 42, and back to the receivers 14. As those of skill in the art can appreciate, whenever a signal - optical or acoustical - travels from one medium with a first index of refraction $n_1$ and meets with a different medium, with a second index of refraction $n_2$, a portion of the transmitted signal is reflected at an angle equal to the incident angle (according to the well-known Snell's law), and a second portion of the transmitted signal can be refracted (again according to Snell's law).

Accordingly, as shown in Figure 2(a), first transmitted signal 20a,b generates first reflected signal 24a,b and first refracted signal 26a,b. First refracted signal 26a,b travels through sediment layer 16 (which can be generically referred to as first subsurface layer 16) beneath ocean floor 42, and can now be considered to be a "new" transmitted signal, such that when it encounters a second medium at second refraction/reflection point 28a,b, a second set of refracted and reflected signals 32a,b and 30a,b are subsequently generated. Further, as shown in Figure 2(a), there happens to be a significant hydrocarbon deposit 44 within a third medium, or solid earth/rock layer 18 (which can be generically referred to as second subsurface layer 18). Accordingly, refracted 38a,b and reflected 36a,b signals are generated by the hydrocarbon deposit at the refraction/reflection point 34a,b and it is the purpose of data acquisition system 10 to generate data that can be used to discover such hydrocarbon deposits 44.

The signals recorded by seismic receivers 14 vary in time, having energy peaks that may correspond to reflectors between layers. In reality, since the sea floor and the air/water are highly reflective, some of the peaks correspond to multiple reflections or spurious reflections that should be eliminated before the geophysical structure can be correctly imaged. Primary waves suffer only one reflection from an interface between layers of the subsurface (e.g., first reflected signal 24a). Waves other than primary waves are known as multiples. A surface multiple signal (not shown) is one such example of a multiple, however there are other ways for multiples to be generated. For example, reflections form the surface can travel back down to the receivers and be recorded as ghosts. Multiples do not add any useful information about the geology beneath the ocean floor, and thus they are, in essence, noise, and it is desirable to eliminate them and/or substantially reduce and/or eliminate their influence in signal processing of the other reflected signals so as to correctly ascertain the presence (or the absence) of underground/underwater hydrocarbon deposits. Similarly ghosts, i.e., reflections of primary waves or multiples from the surface of the water which are again recorded by receivers 14, should also be suppressed or removed.

The embodiments below are discussed without specifying the type of seismic receivers used to record the seismic data. In this sense, it is known in the art to use, for a marine seismic survey, streamers that are towed one or more vessels and the streamers include the seismic receivers. The streamers may be horizontal or slanted or have a curved profile as illustrated in Figure 2(b).

The curved streamer 200 of Figure 2(b) includes a body 202 having a predetermined length; plural detectors 204 provided along the body; and plural birds 206 provided along the body for maintaining the selected curved profile. The streamer is configured to flow underwater when towed such that the plural detectors are distributed along the curved profile. The curved profile may be described by a parameterized curve, e.g., a curve described by (i) a depth $z0$ of a first detector (measured from the water surface 212), (ii) a slope $s0$ of a first portion T of the body with an axis 214 parallel with the water surface 212, and (iii) a predetermined horizontal distance $hc$ between the first detector and an end of the curved profile. It is noted that not the entire streamer has to have the curved profile. In other words, the curved profile should not be construed to always apply to the entire length of the streamer. While this situation is possible, the curved profile may be applied only to a portion 208 of the streamer. In other words, the streamer may have (i) only a portion 208 having the curved profile or (ii) a portion 208 having the curved profile and a portion 210 having a flat profile, the two portions being attached to each other.

Although the description of a seismic data acquisition survey system was focused on an offshore (marine) seismic system, it should be noted that the described embodiments are equally applicable to an onshore data acquisition survey system. One skilled in the art will recognize that sources and receivers can be either attached to the surface or buried beneath the surface to produce equivalent data sampling arrangements as those described for vessels towing streamers. In another aspect, data centers associated with the one or more vessels towing the streamers can reside in vehicles, i.e., trucks and/or trailers located at the sites of the attached or embedded sources and receivers as described for Figure 2(c).

A configuration for achieving onshore seismic monitoring is illustrated in Figure 2(c). Figure 2(c) shows a system 310 for the acquisition of seismic data. The system 310 includes plural receivers 312 positioned over an area 312a of a subsurface to be explored and in contact with the surface 314 of the ground. A number of vibroseismic sources 316 are also placed on the surface 314 in an area 316a, in a vicinity of the area 312a of the receivers 312. A recording device 318 is connected to the plurality of receivers 312 and placed, for example, in a station-truck 320. Each source 316 may be composed of a variable number of vibrators, typically between 1 and 5, and may include a local controller 322. A central controller 324 may be present to coordinate the shooting times of the sources 316. A GPS system 326 may be used to time-correlate the sources 316 and the receivers 312.

With this configuration, sources 316 are controlled to generate seismic waves, and the plurality of receivers 312 records waves reflected by the oil and/or gas reservoirs and other structures. The seismic survey may be repeated at various time intervals, e.g., months or years apart, to determine changes in the reservoirs. Although repeatability of source and receiver locations is generally easier to achieve onshore, the variations caused by changes in near-surface can be significantly larger than reservoir fluid displacement, making time-lapse 4D seismic acquisition and repeatability challenging. Thus, variations in seismic velocity in the near-surface are a factor that impacts repeatability of 4D surveys.

The data collected and recorded by receivers 14 of Figure 2(a) or receivers 314 of Figure 2(c) are processed according to the invention to, among other things, introduce into the non-linear tomography, an additional structural constraint, under the form of an offset-dependent dip constraint. The embodiment introduces an extra term in the cost function for minimizing the misfit between the offset-dependent dip of the re-migrated events and an expected dip, e.g., the average dip.

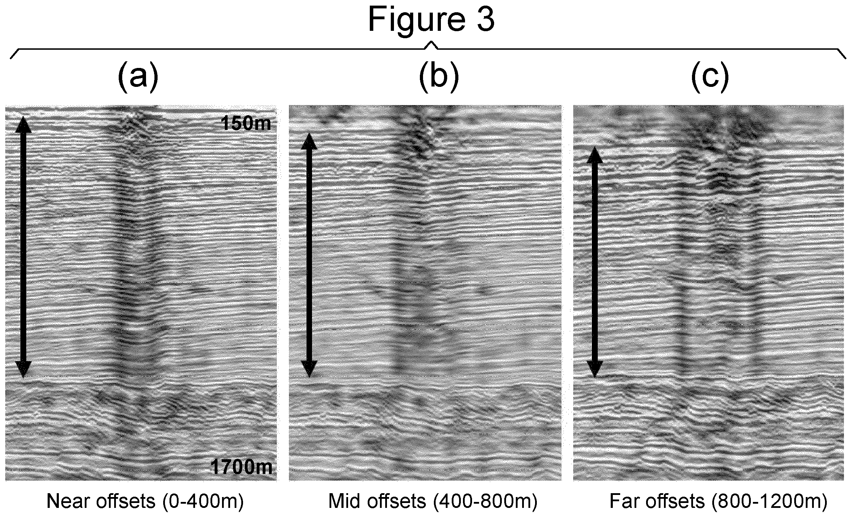

As can be observed from Figures 3(a)-3(c), an embodiment presents an original spatial dip constraint utilizing data selected volumetrically and inserted in the non-linear optimization scheme used by non-linear tomography. Further, Figures 3(a)-3(c) depicts an embodiment wherein the seismic data is associated with very narrow channels, i.e., Figure 3(a) represents the near-offsets at 0-400 meters, Figure 3(b) represents the mid-offsets at 400-800 meters and Figure 3(c) represents the far-offsets at 800-1200 meters. It should be noted in the Figure 3 embodiment that pull-down and pull-up effects are associated with very shallow channels as measured in Pre-SDM partial-offset stacks. Further in the Figure 3 embodiment, the shading indicates the dip error with respect to a smoothed dip model and the footprint of the shallow velocity anomaly becomes wider with greater offset, indicating the three-dimensional nature of the distortions. It should be noted in the embodiment that arrows 302, 304, 306 delineate the dip sub-volumes effectively inverted by the dip tomography.

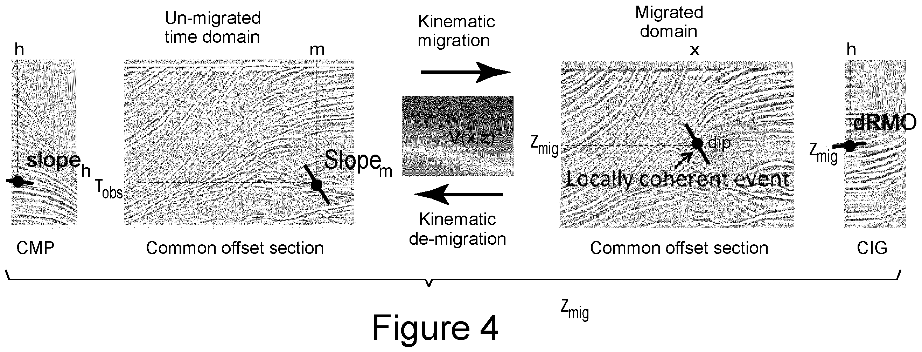

To provide a context for the one or more embodiment descriptions and an understanding of how dip constrained non-linear tomography is accomplished, it should be understood that the inversion data in non-linear tomography is comprised of a set of offset-dependent locally coherent events. Looking to Figure 4, these events are defined in the un-migrated time domain by shot and receiver positions, two-way travel-time and time slopes in all of the dimensions of the acquisition geometry, i.e., x, y and vector offset. It should be noted in the embodiment that these data are generally obtained by kinematic finite-offset demigration and based on the fact that they do not depend on the initial velocity model, they are known as kinematic invariants.

Continuing with the embodiment depicted in Figure 4, a kinematic remigration is applied to update each locally coherent event in the velocity. Then the embodiment computes the derivative of the residual move-out (RMO) curve with respect to offset $\delta RMO$ and the non-linear tomography determines a velocity model "m" that minimizes the cost function "C(m)" based on the following equation:

$$C(m) = \sum \alpha_i \|\delta RMO_i\|^n + R(m), \tag{1}$$

where R(m) denotes a regularization term on the velocity model and $\alpha_i$ denotes the weight associated with each selected RMO event. It should be noted in the embodiment that the non-linear tomography updates the velocity model with a non-linear iterative optimization scheme. It should further be noted in the embodiment that Fréchet derivatives of $\delta RMO$, with respect to velocity model parameters, can be computed based on paraxial ray theory.

Considering that the embodiment has extra information associated with the common offset dip of some of the events, and the extra information comprises an expected dip value $dip_{ref}$, e.g., for the case of the previously described pull-up and pull-down distortions, the spatial dip is expected to follow the general trend of the structure. Looking to the embodiment, the offset spatial dip distortions that are measured below localized velocity anomalies are introduced into the cost function for delineating and quantifying those velocity anomalies. Accordingly, the extended cost function is derived as the equation:

$$C(m) = \sum_{rmoevents} \alpha_i \|\delta RMO_i\|^n + \sum_{dipevents} \beta_j \|dip_j - dip_{jref}\|^n + R(m), \tag{2}$$

where the additional term contains the misfit between migrated dips and expected dips and $\beta_j$ is defined as the weight associated with each dip event. Continuing with the embodiment, the dip constrained non-linear tomography functions to minimize the cost function using the non-linear iterative optimization scheme wherein the Fréchet derivatives for the dip term are computed based on paraxial ray theory. It should be noted in the embodiment that the dip constraint is structural and does not constrain the position of the seismic reflectors.

Considering a shallow channel example, the migration velocity analysis usually fails to identify velocity variations attributed to very shallow channels based on the fact that the RMO selections are sparse in shallow locations and resolution (redundancy) is limited. Consequently, distortions described as unresolved shallow velocity anomalies result after depth migration into distortions, e.g., pull-up or pull-down effects that corrupt, specifically, the shape and the position of the migrated seismic reflectors in the deeper parts of the subsurface.

Application of a dip constraint to volumetrically selected events leads to more accurate and more flexible workflows. Returning to Figures 3(a)-(c), it will be apparent to those skilled in the art that the pull-down and pull-up effects are observable on various pre-SDM partial offset stacks for a velocity model predicted by a conventional RMO tomography. It should be noted that the lack of RMO selections in the very shallow layers leads to poorly resolved shallow layers. Considering that the expected dip model is estimated from a smoothed dip model, and observing, again Figures 3(a)-(c), the discrepancies between the measured offset dependent dip and the expected dip model, a dense set of offset dependent dip events and a less dense set of RMO events are volumetrically selected in the depth range of 0-1200 meters. The selected events are then inverted by dip constrained non-linear tomography for updating the shallow layers in the depth range of 0-300 meters. Next, a non-linear tomography is applied is applied while fixing the velocity in the shallow layers.

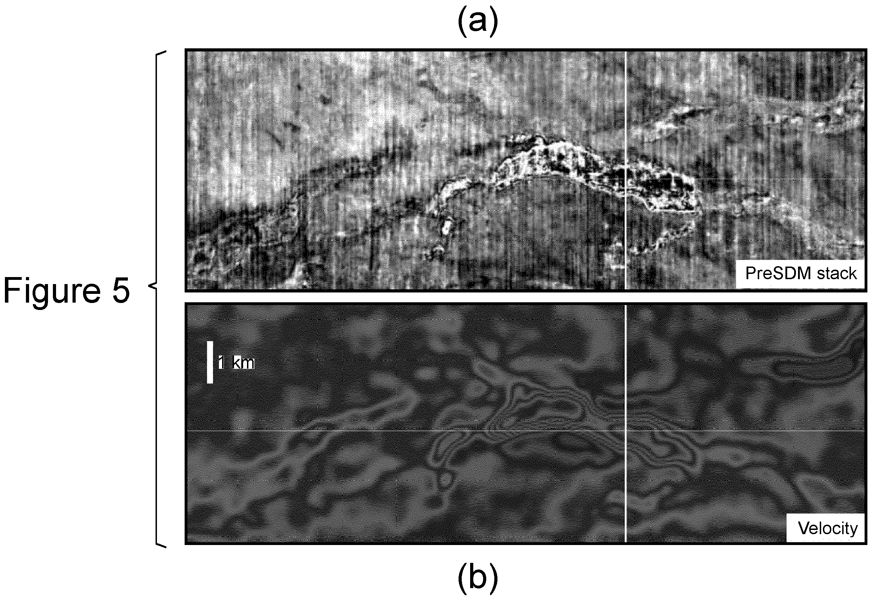

Figure 5 provides some examples associated with applying these embodiments to seismic data. Looking to Figure 5, a shallow slice at a depth of 100 meters of the pre-SDM stack is shown as Figure 5(a), and the corresponding velocity model after application of an embodiment of the afore-described dip constrained tomography is shown as Figure 5(b). It should be noted by those skilled in the art reviewing Figures 5(a) and 5(b) that the localized shallow velocity structures are revealed by the dip constrained tomography and the conformation with the imaged structures.

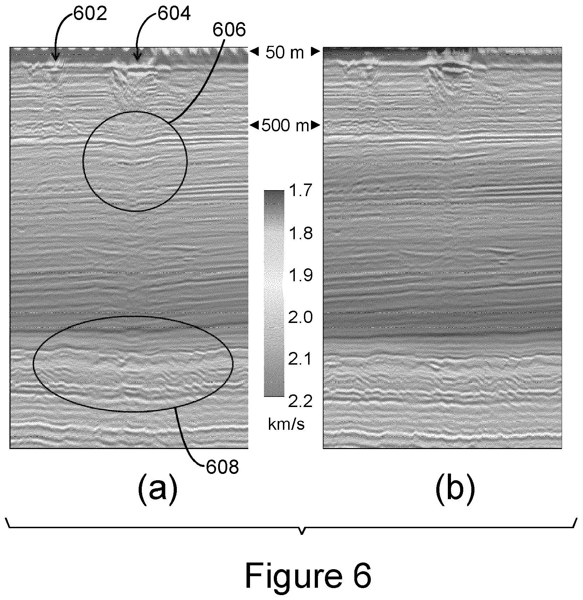

As another example, and looking now to Figure 6, a vertical section of pre-SDM stack and velocity model across shallow channels 602, 604 before tomography is shown as Figure 6(a) and, then, after the application of dip constrained tomography according to an embodiment in Figure 6(b). It should be noted by those skilled in the art reviewing Figures 6(a) and 6(b) that the embodiment dip constrained tomography has removed pull-up and pull-down effects in deeper parts of the model and that the seismic amplitudes along the main reflectors have greater regularity. It should further be noted that before application of the embodiment, i.e., in Figure 6(a), the anomaly footprint becomes wider at greater depth 606, 608 and that after application of an embodiment of dip constrained non-linear tomography, i.e., in Figure 6(b), the migrated image is better focused and less distorted.

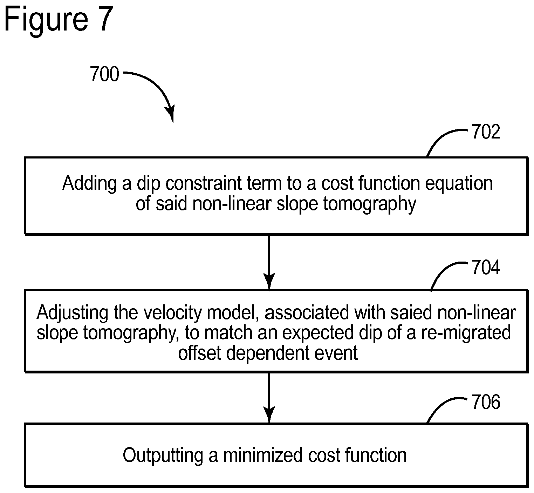

Looking now to Figure 7, a method embodiment for dip constrained non-linear tomography is depicted. Beginning at step 702 of the method embodiment, a dip constraint term is added to a cost function equation associated with the non-linear tomography. It should be noted in the embodiment that the additional dip constraint term is summed over the selection of dip constraint terms and the summation is multiplied by a weighting factor to balance the effect of the dip constraint term against the other terms of the cost equation.

Next, at step 704 of the method embodiment, the velocity model associated with the non-linear tomography is adjusted to match an expected dip of a re-migrated offset dependent event. It should further be noted in the method embodiment that the adjustment results in the minimization of the cost function. It should further be noted that a non-linear iterative optimization scheme is performed to accomplish the adjustment and that the dip constraint is structural and does not constrain the position of the seismic reflectors.

Next at step 706 of the method embodiment, the minimized cost function is output for further processing. It should be noted that the minimized cost function can be used to provide improved depth imaging of shallow locations.

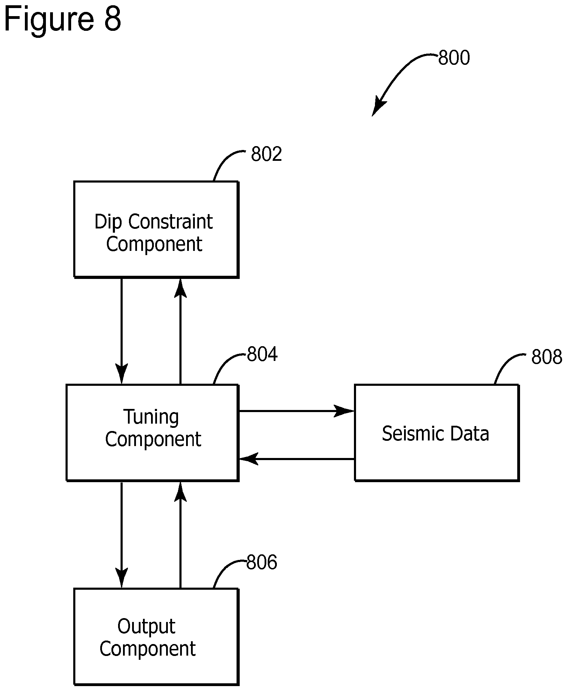

As will be appreciated from the foregoing discussion, methods for dip constrained non-linear tomography according to these embodiments may, at least in part, be implemented in software operating on a suitably programmed computing device. An exemplary implementation, with suitable software modules or components, will now be described with respect to Figure 8. Looking now to Figure 8, an embodiment cost function minimization system 800 comprises a dip constraint component 802, a tuning component 804, an output component 806 and seismic data 808. The dip constraint component 802 provides the capability to add a dip constraint term to a cost function equation. It should be noted in the exemplary embodiment that the dip constraint term is structural and does not constrain the position of the seismic reflectors.

Continuing with the embodiment, the tuning component 804 provides the capability to adjust a velocity model to match an expected dip of a plurality of re-migrated offset dependent events. It should be noted in the embodiment that a non-linear iterative optimization technique is used to adjust the velocity model. It should further be noted in the embodiment that the Frée het derivatives for the dip constraint term are computed using a paraxial ray technique.

Continuing with the embodiment, the output component 806 provides the capability to output a minimized cost function based on the seismic data 808. It should be noted in the exemplary embodiment that the minimized cost function is used for further processing associated with the seismic data.

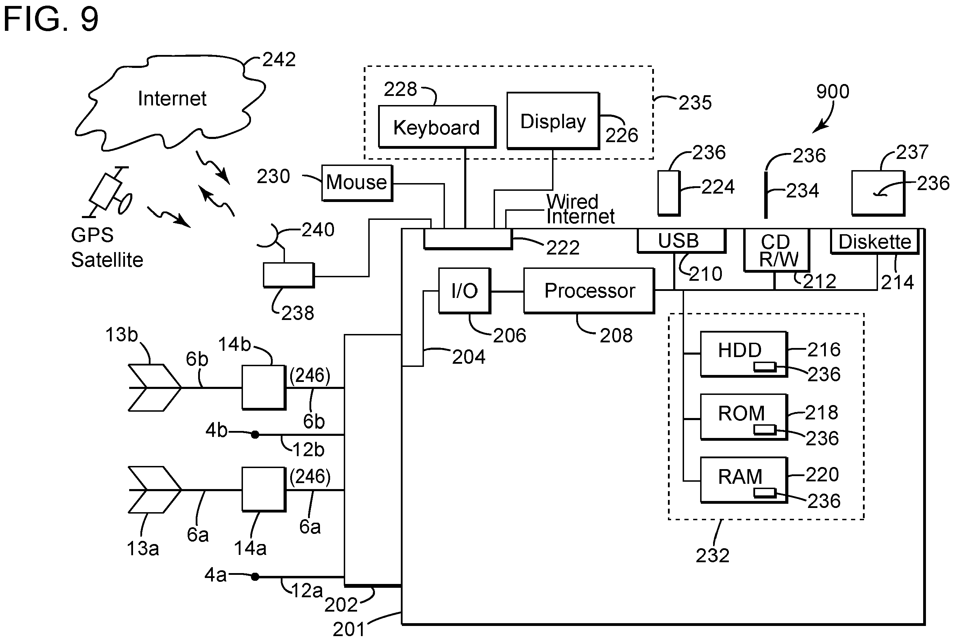

The computing device(s) or other network nodes involved in dip constrained non-linear tomography as set forth in the above described embodiments may be any type of computing device capable of processing and communicating seismic data associated with a seismic survey. An example of a representative computing system capable of carrying out operations in accordance with these embodiments is illustrated in Figure 9. System 900 includes, among other items, server 201, source/receiver interface 202, internal data/communications bus (bus) 204, processor(s) 208 (those of ordinary skill in the art can appreciate that in modern server systems, parallel processing is becoming increasingly prevalent, and whereas a single processor would have been used in the past to implement many or at least several functions, it is more common currently to have a single dedicated processor for certain functions (e.g., digital signal processors) and therefore could be several processors, acting in serial and/or parallel, as required by the specific application), universal serial bus (USB) port 210, compact disk (CD)/digital video disk (DVD) read/write (R/W) drive 212, floppy diskette drive 214 (though less used currently, many servers still include this device), and data storage unit 232.

Data storage unit 232 itself can comprise hard disk drive (HDD) 216 (these can include conventional magnetic storage media, but, as is becoming increasingly more prevalent, can include flash drive-type mass storage devices 224, among other types), ROM device(s) 218 (these can include electrically erasable (EE) programmable ROM (EEPROM) devices, ultra-violet erasable PROM devices (UVPROMs), among other types), and random access memory (RAM) devices 220. Usable with USB port 210 is flash drive device 224, and usable with CD/DVD R/W device 212 are CD/DVD disks 234 (which can be both read and write-able). Usable with diskette drive device 214 are floppy diskettes 237. Each of the memory storage devices, or the memory storage media (216, 218, 220, 224, 234, and 237, among other types), can contain parts or components, or in its entirety, executable software programming code (software) 236 that can implement part or all of the portions of the method described herein. Further, processor 208 itself can contain one or different types of memory storage devices (most probably, but not in a limiting manner, RAM memory storage media 220) that can store all or some of the components of software 236.

In addition to the above described components, system 200 also comprises user console 234, which can include keyboard 228, display 226, and mouse 230. All of these components are known to those of ordinary skill in the art, and this description includes all known and future variants of these types of devices. Display 226 can be any type of known display or presentation screen, such as liquid crystal displays (LCDs), light emitting diode displays (LEDs), plasma displays, cathode ray tubes (CRTs), among others. User console 235 can include one or more user interface mechanisms such as a mouse, keyboard, microphone, touch pad, touch screen, voice-recognition system, among other inter-active intercommunicative devices.

User console 234, and its components if separately provided, interface with server 201 via server input/output (I/O) interface 222, which can be an RS232, Ethernet, USB or other type of communications port, or can include all or some of these, and further includes any other type of communications means, presently known or further developed.

System 200 can further include communications satellite/global positioning system (GPS) transceiver device 238, to which is electrically connected at least one antenna 240 (according to an exemplary embodiment, there would be at least one GPS receive-only antenna, and at least one separate satellite bi-directional communications antenna). System 200 can access internet 242, either through a hard wired connection, via I/O interface 222 directly, or wirelessly via antenna 240, and transceiver 238.

Server 201 can be coupled to other computing devices, such as those that operate or control the equipment of ship 2, via one or more networks. Server 201 may be part of a larger network configuration as in a global area network (GAN) (e.g., internet 242), which ultimately allows connection to various landlines.

According to a further exemplary embodiment, system 200, being designed for use in seismic exploration, will interface with one or more sources 4a,b and one or more receivers 14. These, as previously described, are attached to streamers 6a,b, to which are also attached birds 13a,b that are useful to maintain positioning. As further previously discussed, sources 4 and receivers 14 can communicate with server 201 either through an electrical cable that is part of streamer 6, or via a wireless system that can communicate via antenna 240 and transceiver 238 (collectively described as communications conduit 246).

According to further exemplary embodiments, user console 235 provides a means for personnel to enter commands and configuration into system 200 (e.g., via a keyboard, buttons, switches, touch screen and/or joy stick). Display device 226 can be used to show: streamer 6 position; visual representations of acquired data; source 4 and receiver 14 status information; survey information; and other information important to the seismic data acquisition process. Source and receiver interface unit 202 can receive the hydrophone seismic data from receiver 14 though streamer communication conduit 248 (discussed above) that can be part of streamer 6, as well as streamer 6 position information from birds 13; the link is bi-directional so that commands can also be sent to birds 13 to maintain proper streamer positioning. Source and receiver interface unit 202 can also communicate bi-directionally with sources 4 through the streamer communication conduit 248 that can be part of streamer 6. Excitation signals, control signals, output signals and status information related to source 4 can be exchanged by streamer communication conduit 248 between system 200 and source 4.

Bus 204 allows a data pathway for items such as: the transfer and storage of data that originate from either the source sensors or streamer receivers; for processor 208 to access stored data contained in data storage unit memory 232; for processor 208 to send information for visual display to display 226; or for the user to send commands to system operating programs/software 236 that might reside in either the processor 208 or the source and receiver interface unit 202.

System 200 can be used to implement the methods described above associated with dip constrained non-linear tomography according to an exemplary embodiment. Hardware, firmware, software or a combination thereof may be used to perform the various steps and operations described herein. According to an exemplary embodiment, software 236 for carrying out the above discussed steps can be stored and distributed on multi-media storage devices such as devices 216, 218, 220, 224, 234, and/or 237 (described above) or other form of media capable of portably storing information (e.g., universal serial bus (USB) flash drive 426). These storage media may be inserted into, and read by, devices such as the CD-ROM drive 414, the disk drive 412, among other types of software storage devices.

It should be noted in the embodiments described herein that these techniques can be applied in either an "offline", e.g., at a land-based data processing center or an "online" manner, i.e., in near real time while onboard the seismic vessel. For example, dip constrained non-linear tomography can occur as the seismic data is recorded onboard the seismic vessel. In this case, it is possible for dip constrained non-linear tomography to be generated as a measure of the quality of the sampling run.

The disclosed exemplary embodiments provide a server system, and a method for dip constrained non-linear tomography associated with seismic data. It should be understood that this description is not intended to limit the invention. It should be noted and understood that there can be improvements and modifications made of the present invention described above without departing from the scope of the invention as set forth in the accompanying claims.

The methods or flow charts provided in the present application may be implemented in a computer program, software, or firmware tangibly embodied in a computer-readable storage medium for execution by a general purpose computer or a processor.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art, as long as the examples are within the scope of the claims.

**Claims**

**1.** A method, stored in a memory and executed on a processor, for seismic data processing, said method comprising:

acquiring seismic data for exploring a geophysical structure probed using seismic excitations;

generating a cost function associated with non-linear slope tomography in the depth-migrated domain using the seismic data;

adding (702) a dip constraint term to said cost function , said dip constraint term containing a misfit between expected dips and migrated dips for selected offset dependent events from the seismic data ;

adjusting (704) a velocity model, associated with said non-linear slope tomography, to match an expected dip of a plurality of re-migrated offset-dependent events and to generate a minimized cost function; and

outputting (706) said minimized cost function for further processing to provide an image of the geophysical structure.

2. The method of claim 1, wherein said dip constraint term is obtained using kinematic migration of locally coherent events.

3. The method of claim 1, wherein said dip constraint term can be interpreted as a structural constraint.

4. The method of claim 1, wherein said dip constraint term is $\sum_{dipevents} \beta_j \left\| dip_j - dip_{jref} \right\|^n$ , wherein, for a dip event $j$, $dip_j$ is a migrated dip, $dip_{jref}$ is a respective expected dip, and $\beta_j$ is a weight associated with the dip event $j$.

5. The method of claim 4, wherein said cost function including said dip constraint term is minimized using a non-linear iterative optimization scheme.

6. The method of claim 5, wherein said non-linear iterative optimization scheme further comprises computing Fréchet derivatives for said dip constraint term based on techniques comprising a paraxial ray technique.

7. The method of claim 4, wherein said cost function is described by the equation:

$$C(m) = \sum_{rmoevents} \alpha_i \left\| \delta RMO_i \right\|^n + \sum_{dipevents} \beta_j \left\| dip_j - dip_{jref} \right\|^n + R(m),$$

where m is the velocity model, $\delta RMO_i$ is a Fréchet derivative with respect to velocity model parameters for RMO event $i$, $R(m)$ denotes a regularization term of the velocity model, and $\alpha_i$ denotes a weight associated with each selected RMO event $i$.

8. The method of claim 1, wherein said offset dependent events are selected volumetrically.

9. A seismic system comprising:

seismic data acquisition equipment for acquiring seismic data for exploring a geophysical structure probed using seismic excitations;

one or more processors (208) configured to execute computer instructions and a memory configured to store said computer instructions wherein said computer instructions process seismic data for generating a cost function associated with non-linear slope tomography in the depth-migrated domain and further comprise:

a dip constraint component (802) for adding a dip constraint term to said cost function , said dip constraint term containing a misfit between expected dips and migrated dips for selected offset dependent events from the seismic data;

a tuning component (804) for adjusting a velocity model, associated with said non-linear slope tomography, to match an expected dip of a plurality of re-migrated offset dependent events and to generate a minimized cost function; and

an output component (806) for outputting said minimized cost function for further processing to provide an image of the geophysical structure.

10. The system of claim 9, wherein said dip constraint component (802) obtains said dip constraint term using kinematic migration of locally coherent events.

11. The system of claim 9, wherein said dip constraint term is a structural constraint.

**12.** The system of claim 9, wherein said offset dependent events are distortions comprising shallow heterogeneities, channels, faults, gas clouds, rough topography and flat spots.

**Patentansprüche**

**1.** Verfahren, gespeichert in einem Speicher und ausgeführt auf einem Prozessor, um seismische Daten zu verarbeiten, wobei das Verfahren Folgendes umfasst:

Erfassen seismischer Daten zum Erforschen einer geophysikalischen Struktur, die unter Verwendung seismischer Anregungen sondiert wird,
Erzeugen einer Kostenfunktion, die mit einer Tomografie mit nichtlinearer Steigung in der tiefenmigrierten Domäne in Verbindung steht, unter Verwendung der seismischen Daten,
Addieren (702) eines Neigungsbeschränkungsterms zu der Kostenfunktion, wobei der Neigungsbeschränkungsterm eine Fehlpassung zwischen erwarteten Neigungen und migrierten Neigungen für ausgewählte versatzabhängige Ereignisse aus den seismischen Daten enthält,
Justieren (704) eines Geschwindigkeitsmodells, das mit der Tomografie mit nichtlinearer Steigung in Verbindung steht, damit es mit einer erwarteten Neigung mehrerer neu migrierter versatzabhängiger Ereignisse übereinstimmt und um eine minimierte Kostenfunktion zu erzeugen, und
Ausgeben (706) der minimierten Kostenfunktion zur weiteren Verarbeitung, um ein Bild der geophysikalischen Struktur bereitzustellen.

**2.** Verfahren nach Anspruch 1, wobei der Neigungsbeschränkungsterm unter Verwendung kinematischer Migration lokal kohärenter Ereignisse erzielt wird.

**3.** Verfahren nach Anspruch 1, wobei der Neigungsbeschränkungsterm als eine strukturelle Beschränkung interpretiert werden kann.

**4.** Verfahren nach Anspruch 1, wobei der Neigungsbeschränkungsterm $\sum_{dipevents} \beta_j \left\| dip_j - dip_{jref} \right\|^n$ ist, wobei für ein Neigungsereignis $j$ $dip_j$ eine migrierte Neigung ist, $dip_{jret}$ eine entsprechende erwartete Neigung ist und $\beta_j$ eine Gewichtung, die mit dem Neigungsereignis $j$ in Verbindung steht, ist.

**5.** Verfahren nach Anspruch 4, wobei die Kostenfunktion, die den Neigungsbeschränkungsterm enthält, unter Verwendung eines nichtlinearen iterativen Optimierungsschemas minimiert wird.

**6.** Verfahren nach Anspruch 5, wobei das nichtlineare iterative Optimierungsschema ferner das Berechnen von Frechet-Abweichungen für den Neigungsbeschränkungsterm basierend auf Techniken umfasst, die eine Achsenparalleler-Strahl-Technik umfassen.

**7.** Verfahren nach Anspruch 4, wobei die Kostenfunktion durch die folgende Gleichung beschrieben ist:

$$C(m) = \sum_{rmoevents} \alpha_i \left\| \delta RMO_i \right\|^n + \sum_{dipevents} \beta_j \left\| dip_j - dip_{jref} \right\|^n + R(m),$$

wobei m das Geschwindigkeitsmodell ist, $\delta RMO_i$ eine Frechet-Abweichung hinsichtlich Geschwindigkeitsmodellparametern für das RMO-Ereignis $i$ ist, R(m) einen Regularisationsterm des Geschwindigkeitsmodells bezeichnet und $\alpha_i$ eine Gewichtung bezeichnet, die mit jedem ausgewählten RMO-Ereignis $i$ in Verbindung steht.

**8.** Verfahren nach Anspruch 1, wobei die versatzabhängigen Ereignisse volumetrisch ausgewählt werden.

**9.** Seismisches System, Folgendes umfassend:

Seismische-Daten-Erfassungsausrüstung zur Erfassung seismischer Daten zum Erforschen einer geophysikalischen Struktur, die unter Verwendung seismischer Anregungen sondiert wird,
einen oder mehrere Prozessoren (208), die dafür konfiguriert sind, Computerbefehle auszuführen, und einen Speicher, der dafür gestaltet ist, die Computerbefehle zu speichern, wobei die Computerbefehle seismische Daten zum Erzeugen einer Kostenfunktion verarbeiten, die mit einer Tomografie mit nichtlinearer Steigung in der tiefenmigrierten Domäne in Verbindung steht, und ferner Folgendes umfassen:

eine Neigungsbeschränkungskomponente (802) zum Addieren eines Neigungsbeschränkungsterms zu der Kostenfunktion, wobei der Neigungsbeschränkungsterm eine Fehlpassung zwischen erwarteten Neigungen und migrierten Neigungen für ausgewählte versatzabhängige Ereignisse aus den seismischen Daten ist,

eine Abstimmkomponente (804) zum Justieren eines Geschwindigkeitsmodells, das mit der Tomografie mit nichtlinearer Steigung in Verbindung steht, damit es mit einer erwarteten Neigung mehrerer neu migrierter versatzabhängiger Ereignisse übereinstimmt und um eine minimierte Kostenfunktion zu erzeugen, und

eine Ausgabekomponente (806) zum Ausgeben der minimierten Kostenfunktion zur weiteren Verarbeitung, um ein Bild der geophysikalischen Struktur bereitzustellen.

10. System nach Anspruch 9, wobei die Neigungsbeschränkungskomponente (802) den Neigungsbeschränkungsterm unter Verwendung kinematischer Migration lokal kohärenter Ereignisse erzielt.

11. System nach Anspruch 9, wobei der Neigungsbeschränkungsausdruck eine strukturelle Beschränkung ist.

12. System nach Anspruch 9, wobei die versatzabhängigen Ereignisse Verzerrungen sind, die Untiefeheterogenitäten, Kanäle, Fehler, Gaswolken, grobe Topografie und Abplattungen umfassen.

## Revendications

1. Procédé, stocké dans une mémoire et exécuté sur un processeur, pour un traitement de données sismiques, ledit procédé comprenant les étapes ci-dessous consistant à :

acquérir des données sismiques pour explorer une structure géophysique sondée en utilisant des excitations sismiques ;

générer une fonction de coût associée à une tomographie de pente non linéaire dans le domaine migré en profondeur, en utilisant les données sismiques ;

ajouter (702) un terme de contrainte d'immersion à ladite fonction de coût, ledit terme de contrainte d'immersion contenant une inadéquation entre des immersions attendues et des immersions migrées pour des événements dépendants du décalage sélectionnés à partir des données sismiques ;

ajuster (704) un modèle de vitesse, associé à ladite tomographie de pente non linéaire, pour faire correspondre une immersion attendue d'une pluralité d'événements dépendants du décalage remigrés et pour générer une fonction de coût minimisée ; et

fournir en sortie (706) ladite fonction de coût minimisée à des fins de traitement supplémentaire, afin de fournir une image de la structure géophysique.

2. Procédé selon la revendication 1, dans lequel ledit terme de contrainte d'immersion est obtenu en utilisant une migration cinématique d'événements localement cohérents.

3. Procédé selon la revendication 1, dans lequel ledit terme de contrainte d'immersion peut être interprété comme une contrainte structurelle.

4. Procédé selon la revendication 1, dans lequel ledit terme de contrainte d'immersion est $\sum_{dipevents} \beta_j \left\| dip_j - dip_{jref} \right\|^n$, dans lequel, pour un événement d'immersion « $j$ », « $dip_j$ » est une immersion migrée, « $dip_{jref}$ » est une immersion attendue respective, et « $\beta_j$ » est un poids associé à l'événement d'immersion « $j$ ».

5. Procédé selon la revendication 4, dans lequel ladite fonction de coût incluant ledit terme de contrainte d'immersion est minimisée en utilisant un schéma d'optimisation itératif non linéaire.

6. Procédé selon la revendication 5, dans lequel ledit schéma d'optimisation itérative non linéaire comprend en outre l'étape consistant à calculer des dérivées de Fréchet pour ledit terme de contrainte d'immersion sur la base de techniques comprenant une technique de rayon paraxial.

7. Procédé selon la revendication 4, dans lequel ladite fonction de coût est décrite par l'équation ci-dessous :

$$C(m) = \sum_{rmoevents} \alpha_i \left\| \delta RMO_i \right\|^n + \sum_{dipevents} \beta_j \left\| dip_j - dip_{jref} \right\|^n + R(m)$$

où « m » est le modèle de vitesse, « $\delta RMO_i$ » est une dérivée de Fréchet par rapport aux paramètres de modèle de vitesse pour un événement RMO « $i$ », « $R(m)$ » désigne un terme de régularisation du modèle de vitesse, et « $\alpha_i$ » désigne un poids associé à chaque événement RMO « $i$ » sélectionné.

8. Procédé selon la revendication 1, dans lequel lesdits événements dépendants du décalage sont sélectionnés de manière volumétrique.

9. Système sismique comprenant :

un équipement d'acquisition de données sismiques destiné à acquérir des données sismiques pour explorer une structure géophysique sondée en utilisant des excitations sismiques ;
un ou plusieurs processeurs (208) configurés de manière à exécuter des instructions informatiques, et une mémoire configurée de manière à stocker lesdites instructions informatiques, dans lequel lesdites instructions informatiques traitent des données sismiques pour générer une fonction de coût associée à la tomographie de pente non linéaire dans le domaine migré en profondeur, et comprennent en outre :

un composant de contrainte d'immersion (802) pour ajouter un terme de contrainte d'immersion à ladite fonction de coût, ledit terme de contrainte d'immersion contenant une inadéquation entre des immersions attendues et des immersions migrées pour des événements dépendants du décalage sélectionnés à partir des données sismiques ;
un composant de syntonisation (804) pour ajuster un modèle de vitesse, associé à ladite tomographie de pente non linéaire, pour faire correspondre une immersion attendue d'une pluralité d'événements dépendants du décalage remigrés et pour générer une fonction de coût minimisée ; et
un composant de sortie (806) pour fournir en sortie ladite fonction de coût minimisée à des fins de traitement ultérieur, afin de fournir une image de la structure géophysique.

10. Système selon la revendication 9, dans lequel ledit composant de contrainte d'immersion (802) obtient ledit terme de contrainte d'immersion en utilisant une migration cinématique d'événements localement cohérents.

11. Système selon la revendication 9, dans lequel ledit terme de contrainte d'immersion est une contrainte structurelle.

12. Système selon la revendication 9, dans lequel lesdits événements dépendants du décalage sont des distorsions comprenant des hétérogénéités peu profondes, des canaux, des failles, des nuages de gaz, une topographie rugueuse et des méplats.

Figure 1(a)

Figure 1(b)

100

108

$Z_4$

106

$Z_3$

110d

$Z_2$

114   110c

106a

$Z_1$

102   110b

110a

EP 2 755 055 B1

14

Figure 2(a)

Figure 2(b)

Figure 2(c)

# Figure 3

(a)

150m

1700m

Near offsets (0-400m)

(b)

Mid offsets (400-800m)

(c)

Far offsets (800-1200m)

EP 2 755 055 B1

Figure 4

Figure 5

(a)                                          (b)

Figure 6

EP 2 755 055 B1

# Figure 7

700

702

Adding a dip constraint term to a cost function equation of said non-linear slope tomography

704

Adjusting the velocity model, associated with saied non-linear slope tomography, to match an expected dip of a re-migrated offset dependent event

706

Outputting a minimized cost function

# Figure 8

800

802

Dip Constraint
Component

804

Tuning
Component

808

Seismic Data

806

Output
Component

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61751567

### Non-patent literature cited in the description

- **V. FARRA.** Non-linear reflection tomography. *Geophysical Journal,* 1988, vol. 95, 135-147
- **G. LAMBARÉ.** Stereotomography. *Geophysics,* 2008, vol. 73 (5), VE25-VE34
- **P. GUILLAUME ; G. LAMBARÉ ; O. LEBLANC ; P. MITOUARD ; J. LE MOIGNE ; J.-P. MONTEL ; A. PRESCOTT ; R. SILIQI ; N. VIDAL ; X. ZHANG.** Kinematic Invariants: An Efficient and Flexible Approach for Velocity Model Building. *the 78th SEG Conference & Exhibition, Workshop ''Advanced Velocity Model Building Techniques for Depth Imaging,* 2008
- **H. TIEMAN ; J. SHERWOOD ; K. SCHLEICHER ; K. SHERWOOD ; S. BRANDSBERG-DAHL.** Dipscan Tomography. *the 71st EAGE Conference & Exhibition, Expanded Abstracts,* 2009
- **DELPRAT-JANNAUD.** Ill-Posed and Well-Posed Formulations of the Reflection Travel Time Tomography Problem. *Journal of Geophysical Research,* 1993, vol. 98 (B4), 6589-6605

- **D. SINOQUET.** Modeling A Priori Information on the Velocity Field in Reflection Tomography. *the 63rd SEG Conference & Exhibition, Expanded Abstracts, SI,* 1993, vol. 1.4, 592-595
- **S. JIN.** Constrained Non-Linear Velocity Inversion of Seismic Reflection Data. *the 69th SEG Conference & Exhibition, Expanded Abstracts,* 1999, 1259-1262
- **F. ADLER ; R. BAINA ; M. A. SOUDANI ; P. CARDONE ; J.-B. RICHARD.** Non-Linear 3D Tomography Least-Squares Inversion of Residual Moveout in Kirchhoff Pre-stack-Depth-Migration Common-Image Gathers. *Geophysics,* 2008, vol. 73 (5), VE13-VE23
- **DELPRATT-JANNAUD ; P. SEXTON ; P. WILLIAMSON.** 3D Anisotropic Velocity Estimation by Model-Based Inversion of Pre-Stack Traveltimes. *the 68th SEG Conference and Exhibition, Expanded Abstracts,* 1998, 1855-1858